# EUROPEAN PATENT APPLICATION

(11) **EP 4 835 124 A1**
(43) Date of publication of application: **04.11.2026**
(21) Application number: 24913552.6
(22) Date of filing: 03.12.2024
(51) Int. Cl.: C22C 38/58, C22C 38/44, C22C 38/06, C22C 38/00, C21D 8/02, C21D 9/46

(54) **THICK STEEL SHEET WITH EXCELLENT CRYOGENIC TOUGHNESS IN WELD HEAT-AFFECTED ZONE**

(30) Priority: 28.12.2023 KR 20230195096
(71) Applicant: Hyundai Steel Company, Incheon 22525 (KR); HD Korea Shipbuilding & Offshore Engineering Co., Ltd., Seongnam-si, Gyeonggi-do 13553 (KR); Hyundai Heavy Industries Co., Ltd., Ulsan 44032 (KR); HD Hyundai Samho Co., Ltd., Jeollanam-do 58462 (KR)
(72) Inventor: EOM, Hae Won, Ulsan 44032 (KR); JEE, Chun Ho, Ulsan 44032 (KR); KIM, Jong Chul, Incheon 22525 (KR); CHON, Seung Hwan, Incheon 22525 (KR); PARK, Min Ho, Incheon 22525 (KR); CHOI, Woo Hyuk, Incheon 22525 (KR); WON, Ju Yeon, Ulsan 44032 (KR)
(74) Representative: Viering, Jentschura & Partner mbB Patent- und Rechtsanwälte
(86) International application number: PCT/KR2024/019585
(87) International publication number: WO 2025/143609

(57) **Abstract**

The present invention relates to a thick steel plate having excellent cryogenic toughness in a weld heat-affected zone, the thick steel plate comprising, in wt%, carbon (C): 0.03 to 0.10%, manganese (Mn): 1.4 to 3.0%, aluminum (Al): 0.025 to 0.10%, nickel (Ni): 4.8 to 6.0%, chromium (Cr): 0.1 to 1.0%, molybdenum (Mo): 0.1 to 1.0%, phosphorus (P): 0.01% or less (excluding 0%), sulfur (S): 0.01% or less (excluding 0%), nitrogen (N): 0.01% or less (excluding 0%), and a balance of iron (Fe) and other unavoidable impurities.

## Description

### TECHNICAL FIELD

The present invention relates to a thick steel plate, and more particularly, to a thick steel plate having excellent cryogenic toughness in a weld heat-affected zone at a cryogenic temperature of -196°C even with a reduced nickel content.

### BACKGROUND ART

A thick steel plate may be primarily applied for use in liquefied natural gas (LNG) applications exposed to cryogenic temperatures. Representative applications include transportation LNG storage tanks, LNG fuel tanks, and the like. However, the scope of application is not limited to LNG alone; the thick steel plate may also be applied as storage and fuel tanks for liquefied fuels having a higher boiling point than LNG, such as liquefied ammonia (-33°C), which can be stored at higher temperatures.

Conventionally, the addition of a large amount of nickel results in high yield strength, which may cause difficulties in the manufacture of cryogenic tanks requiring bending. When fabricating welded structures by arc welding with the addition of a large amount of nickel, magnetization easily occurs at welded joints including the base metal, causing phenomena such as arc blow that degrade the quality of completed welded joints. Recently, thick steel plates containing approximately 9% nickel (9% nickel steel) have been used; however, as the cost of nickel has continued to rise, the development of thick steel plates with a nickel content of less than 9% while maintaining excellent cryogenic toughness has been under way. However, when the nickel content is reduced, it is difficult to satisfy cryogenic toughness characteristics. In particular, a reduction in nickel content causes the problem that brittle fracture in the weld heat-affected zone easily occurs. A related prior art document is Korean Patent Publication No. 10-2020-0140907.

### DETAILED DESCRIPTION OF THE INVENTION

### TECHNICAL PROBLEM

A technical problem to be achieved by the technical concept of the present invention is to provide a thick steel plate in which brittle fracture in the weld heat-affected zone is improved and which has excellent cryogenic toughness.

However, such a problem is exemplary, and the technical concept of the present invention is not limited thereto.

### TECHNICAL SOLUTION

According to one aspect of the present invention, a thick steel plate having excellent cryogenic toughness in a weld heat-affected zone, a method of manufacturing the same, and a welded structure are provided.

According to one embodiment of the present invention, the thick steel plate having excellent cryogenic toughness in a weld heat-affected zone comprises, in wt%, carbon (C): 0.03 to 0.10%, manganese (Mn): 1.4 to 3.0%, aluminum (Al): 0.025 to 0.10%, nickel (Ni): 4.8 to 6.0%, chromium (Cr): 0.1 to 1.0%, molybdenum (Mo): 0.1 to 1.0%, phosphorus (P): 0.01% or less (excluding 0%), sulfur (S): 0.01% or less (excluding 0%), nitrogen (N): 0.01% or less (excluding 0%), and a balance of iron (Fe) and other unavoidable impurities, wherein the thick steel plate may satisfy the following Formula 1. [Formula 1] $50 \leq E = \left[Mn\right] / \left[Al\right] \leq 67$
(wherein [Mn] and [Al] are the weight% values of manganese and aluminum, respectively)

According to one embodiment of the present invention, the thick steel plate may further satisfy the following Formula 2. [Formula 2] $9 \leq F = \left(\left[C\right]+\left[Mn\right]/6+\left[N\right]\right) / \left[Al\right] \leq 13$
(wherein [Mn], [Al], [C], and [N] are the weight% values of manganese, aluminum, carbon, and nitrogen, respectively)

According to one embodiment of the present invention, the thick steel plate may have a microstructure comprising retained austenite in a volume fraction of 5% to 15% in a tempered martensite matrix.

According to one embodiment of the present invention, the retained austenite may have an average equivalent circle diameter of 3 µm or less, and acicular retained austenite having a minor axis/major axis aspect ratio of 1.5 or more may account for 50% or more in volume fraction of the total retained austenite.

According to one embodiment of the present invention, the thick steel plate may have an average impact toughness of 27 J or more at -196°C.

According to one embodiment of the present invention, in the thick steel plate, a weld heat-affected zone formed by a heat input in a range of 10 kJ/cm to 30 kJ/cm may have an average impact toughness of 27 J or more at -196°C.

According to one embodiment of the present invention, the thick steel plate may satisfy yield strength (YS): 640 MPa to 890 MPa, tensile strength (TS): 710 MPa to 930 MPa, and elongation (EL): 20% to 30%.

According to one embodiment of the present invention, the method of manufacturing the thick steel plate having excellent cryogenic toughness in a weld heat-affected zone may comprise, in the following order: a first step of providing a steel material comprising, in wt%, carbon (C): 0.03 to 0.10%, manganese (Mn): 1.4 to 3.0%, aluminum (Al): 0.025 to 0.10%, nickel (Ni): 4.8 to 6.0%, chromium (Cr): 0.1 to 1.0%, molybdenum (Mo): 0.1 to 1.0%, phosphorus (P): 0.01% or less (excluding 0%), sulfur (S): 0.01% or less (excluding 0%), nitrogen (N): 0.01% or less (excluding 0%), and a balance of iron (Fe) and other unavoidable impurities; a second step of hot rolling the steel material at a reheating temperature of 1000°C to 1200°C under a finish rolling temperature condition of Ar3 or higher; a third step of heating the hot-rolled steel material to a temperature range of Ac1 to Ac3, holding, and then quenching; and a fourth step of tempering the steel material at a temperature of Ac1 or lower, and a thick steel plate manufactured by the method of manufacturing a thick steel plate may satisfy the following Formula 1. [Formula 1] $50 \leq E = \left[Mn\right] / \left[Al\right] \leq 67$
(wherein [Mn] and [Al] are the weight% values of manganese and aluminum, respectively)

According to one embodiment of the present invention, the thick steel plate may further satisfy the following Formula 2. [Formula 2] $9 \leq F = \left(\left[C\right]+\left[Mn\right]/6+\left[N\right]\right) / \left[Al\right] \leq 13$
(wherein [Mn], [Al], [C], and [N] are the weight% values of manganese, aluminum, carbon, and nitrogen, respectively)

According to one embodiment of the present invention, the third step may be performed by holding the steel material in a temperature range of Ac1 to Ac3 for 30 minutes to 150 minutes.

According to one embodiment of the present invention, the fourth step may be performed at a temperature in a range of 550°C to 620°C for 30 minutes to 200 minutes.

According to one embodiment of the present invention, a welded structure manufactured by welding the thick steel plate having excellent cryogenic toughness in a weld heat-affected zone may satisfy the following Formula 1.\ [Formula 1] $50 \leq E = \left[Mn\right] / \left[Al\right] \leq 67$
(wherein [Mn] and [Al] are the weight% values of manganese and aluminum, respectively)

According to one embodiment of the present invention, the welded structure may satisfy the following Formula 2. [Formula 2] $9 \leq F = \left(\left[C\right]+\left[Mn\right]/6+\left[N\right]\right) / \left[Al\right] \leq 13$
(wherein [Mn], [Al], [C], and [N] are the weight% values of manganese, aluminum, carbon, and nitrogen, respectively)

The weld heat-affected zone of the welded structure may have an average impact toughness of 27 J or more at -196°C.

According to one embodiment of the present invention, the weld heat-affected zone of the welded structure may have a microstructure in which bainite and lath martensite combined account for 95% or more in volume fraction.

### ADVANTAGEOUS EFFECTS

According to the technical concept of the present invention, it is possible to provide a thick steel plate capable of securing cryogenic toughness of 27 J or more at -196°C in the weld heat-affected zone over a wide heat input range of 10 kJ/cm to 30 kJ/cm, by reducing nickel by approximately 3% to 4% compared to the prior art to secure economic efficiency and by optimizing other alloy compositions.

The effects of the present invention described above are illustrative, and the scope of the present invention is not limited by these effects.

### DESCRIPTION OF THE DRAWINGS

FIG. 1 is a flowchart illustrating a method of manufacturing a thick steel plate having excellent cryogenic toughness in a weld heat-affected zone according to one embodiment of the present invention.
FIG. 2 is a diagram illustrating a heat treatment concept in a method of manufacturing a thick steel plate having excellent cryogenic toughness in a weld heat-affected zone according to one embodiment of the present invention.
FIG. 3 is a scanning electron microscopy (SEM) photograph of the microstructures of thick steel plates according to Embodiment 9 and Comparative Example 6 among the experimental examples of the present invention.
FIG. 4 shows results of electron backscatter diffraction (EBSD) analysis of the microstructures of thick steel plates according to Embodiment 8 and Comparative Example 1 among the experimental examples of the present invention.

### MODE OF THE INVENTION

Hereinafter, preferred embodiments of the present invention will be described in detail with reference to the accompanying drawings. The embodiments of the present invention are provided to more completely explain the technical concept of the present invention to those of ordinary skill in the art, and the following embodiments may be modified into various other forms, and the scope of the technical concept of the present invention is not limited to the following embodiments. Rather, these embodiments are provided to make the present disclosure more thorough and complete, and to fully convey the technical concept of the present invention to those skilled in the art. In the present specification, the same reference numerals denote the same elements throughout. Furthermore, various elements and regions in the drawings are schematically illustrated. Accordingly, the technical concept of the present invention is not limited by the relative sizes or spacings depicted in the accompanying drawings.

### Thick Steel Plate

The thick steel plate having excellent cryogenic toughness in a weld heat-affected zone according to one embodiment of the present invention comprises, in wt%, carbon (C): 0.03 to 0.10%, manganese (Mn): 1.4 to 3.0%, aluminum (Al): 0.025 to 0.10%, nickel (Ni): 4.8 to 6.0%, chromium (Cr): 0.1 to 1.0%, molybdenum (Mo): 0.1 to 1.0%, phosphorus (P): 0.01% or less (excluding 0%), sulfur (S): 0.01% or less (excluding 0%), nitrogen (N): 0.01% or less (excluding 0%), and a balance of iron (Fe) and other unavoidable impurities.

Here, the thick steel plate refers to a steel plate having a thickness of approximately 6 mm to 50 mm.

Hereinafter, the role of each element and the content thereof included in the thick steel plate according to the present invention will be described. In this case, the content of each constituent element is expressed in wt%.

### Carbon (C)

Carbon (C) is an indispensable element for imparting high strength to a steel plate; it is a principal element that increases the hardenability of the steel plate and determines the strength after quenching. Depending on the carbon content and the manufacturing method, carbon may exist as dissolved carbon within the material microstructure, or may combine with elements having a very high affinity for carbon to form carbides. In addition, in order to obtain a high toughness after quenching, it is preferable that carbon be included in a content of 0.03 wt% or more in the entire slab. However, if added excessively, cryogenic toughness decreases due to excessive strength increase; therefore, the upper limit is set at 0.10 wt%. In addition, carbon is an austenite stabilizing element and is an indispensable element for securing retained austenite after tempering. Accordingly, the range of carbon addition may be 0.03 wt% to 0.10 wt% of the total weight of the thick steel plate.

### Silicon (Si)

Silicon (Si) is a solid-solution strengthening element that contributes to the strengthening of the steel plate and, together with aluminum, acts as a deoxidizer to separate and remove inclusions in molten steel as slag. However, in the present invention, silicon is not intentionally added except for unavoidable impurities. When silicon is added in excess, the region of impact toughness degradation in the weld heat-affected zone widens due to the temper embrittlement phenomenon of the weld heat-affected zone; therefore, it is intended to address this drawback through an aluminum-only deoxidation process while securing the cryogenic properties of the steel material. That is, in the thick steel plate of the present invention, silicon is not intentionally added in order to improve the auto-tempering effect at the weld toe, and it is sufficient to utilize aluminum as a deoxidizing element as a means to control inclusions in molten steel. Accordingly, it is preferable to exclude silicon by not adding it intentionally.

### Manganese (Mn)

Manganese (Mn) also functions as a deoxidizer, but as a representative austenite stabilizing element, it is an element that contributes to an increase in the amount of retained austenite by being added as a substitute for the expensive nickel to reduce its content. To demonstrate this effect, the lower limit is set at 1.4 wt%. However, if manganese is added in excess, it segregates at grain boundaries, increasing the possibility of brittle fracture, causing temper embrittlement, and forming a large amount of coarse retained austenite, which rather decreases cryogenic toughness; therefore, the upper limit is set at 3.0 wt% to secure the stability of retained austenite in a dissolved state. Accordingly, the range of manganese addition may be 1.4 wt% to 3.0 wt% of the total weight of the thick steel plate.

### Aluminum (Al)

Aluminum (Al) is a representative ferrite-stabilizing element that has the advantage of increasing the volume fraction of ferrite and, when dissolved in ferrite, improving the mechanical strength of the steel material. In addition, it is expected to have the effect of suppressing brittle crack propagation by refining the lath martensite structure, which is the primary microstructure of the thick steel plate of the present invention. However, since aluminum as a ferrite-stabilizing element is not suitable from the perspective of increasing the volume fraction of retained austenite described above, its upper limit is set at 0.10 wt%. On the other hand, when added at less than 0.025 wt%, the refinement effect of ferrite decreases; therefore, the lower limit is set at 0.025 wt%. Accordingly, the range of aluminum addition may be 0.025 wt% to 0.10 wt% of the total weight of the thick steel plate.

### Phosphorus (P)

Phosphorus (P) is a representative impurity element that is preferably absent because it causes intergranular fracture; however, since it inevitably remains during molten steel production, its upper limit is set at 0.01 wt% to secure cryogenic toughness. Accordingly, the range of phosphorus addition may be more than 0 wt% to 0.01 wt% of the total weight of the thick steel plate.

### Sulfur (S)

Sulfur (S), like phosphorus (P), acts as a cause of intergranular fracture and combines with manganese to form manganese sulfide (MnS), which reduces the toughness of the steel plate; therefore, its upper limit is set at 0.01 wt%. Accordingly, the range of sulfur addition may be more than 0 wt% to 0.01 wt% of the total weight of the thick steel plate.

### Nickel (Ni)

Nickel (Ni) is a useful element capable of simultaneously improving strength and toughness, and as the amount added increases, the fraction of retained austenite increases. In particular, it plays a role in stabilizing retained austenite at room temperature and at cryogenic temperatures (-196°C), thereby having the effect of suppressing brittle fracture of the steel material. However, in the present invention, the upper limit is set at 6.0 wt% to reduce the expensive nickel. However, if reduced excessively, retained austenite cannot be secured at a target level; therefore, the lower limit is set at 4.8 wt%. Accordingly, the range of nickel addition may be 4.8 wt% to 6.0 wt% of the total weight of the thick steel plate.

Conventionally, research had been conducted on thick steel plates with the nickel content reduced to 6 wt%; however, when the nickel content is controlled as low as 6 wt% or less, it is not easy to secure retained austenite, and therefore there was a problem that the cryogenic toughness improvement effect by the retained austenite microstructure could not be obtained. However, in the present invention, in order to solve this problem, an optimal range of elements such as aluminum and manganese in addition to the nickel element was derived, thereby developing a method capable of obtaining an effect of improving cryogenic toughness even when the nickel content is controlled to 6 wt% or less.

### Chromium (Cr)

Chromium (Cr) is a useful element for securing the cryogenic toughness of steel by being concentrated in austenite formed in the lamellarizing heat treatment temperature range to increase its stability, and it is preferable to add chromium in a content of 0.1 wt% or more. However, if chromium is added in excess, the strength increases excessively and temper embrittlement may occur; therefore, the upper limit of chromium is set at 1.0 wt%. Accordingly, the range of chromium addition may be 0.1 wt% to 1.0 wt% of the total weight of the thick steel plate.

### Molybdenum (Mo)

Molybdenum (Mo) is, together with chromium (Cr), a useful element for increasing the strength of steel and improving the stability of austenite. To maximize the effects of the present invention, it is preferable to add molybdenum in a content of 0.1 wt% or more. However, if molybdenum is added in excess, the strength of the steel increases excessively, which rather decreases cryogenic toughness; therefore, the preferred upper limit of molybdenum is 1.0 wt%. Accordingly, the range of molybdenum addition may be 0.1 wt% to 1.0 wt% of the total weight of the thick steel plate.

### Nitrogen (N)

Nitrogen (N) is a harmful element as an impurity element; having a very small atomic size, it easily moves to dislocations during deformation of the steel material to form a Cottrell atmosphere and suppresses plastic deformation of the steel material. However, when manganese is added in a large amount as in the present invention, nitrogen in the slag is re-dissolved into the molten steel during the steelmaking process, increasing the nitrogen content. In conventional 9% nickel steel, silicon is added only in a small amount as a deoxidizer. However, in the present invention, aluminum added in excess of the amount generally added combines with nitrogen to form aluminum nitride (AlN), which is uniformly distributed in the steel material and has an effect of refining the lath martensite. Accordingly, the range of nitrogen addition may be more than 0 wt% to 0.01 wt% of the total weight of the thick steel plate.

The remaining component of the thick steel plate is iron (Fe). However, since unintended impurities may inevitably be incorporated from raw materials or the surrounding environment during the ordinary steelmaking process, these cannot be excluded. Since these impurities are known to any person skilled in the ordinary manufacturing process, all the details thereof will not be specifically mentioned in the present specification.

Meanwhile, the thick steel plate according to a modified embodiment of the present invention may further contain at least one of elements having the following composition ranges, in addition to the alloy elements described above.

The thick steel plate may further contain at least one selected from the group consisting of, in wt%, Cu: 1.00% or less (excluding 0%), Ti: 0.025% or less (excluding 0%), Nb: 0.10% or less (excluding 0%), V: 0.50% or less (excluding 0%), B: 0.0050% or less (excluding 0%), Ca: 0.0030% or less (excluding 0%), REM: 0.0050% or less (excluding 0%), and Zr: 0.0050% or less (excluding 0%).

### Copper (Cu)

Copper (Cu) is an austenite stabilizing element that contributes to an increase in the amount of retained austenite. However, if copper is added in excess, the strength of the steel is excessively improved and the target cryogenic toughness effect cannot be obtained; therefore, the upper limit thereof is preferably set at 1.00 wt% or less (excluding 0 wt%). A more preferable upper limit of the copper content is 0.8 wt% or less, and even more preferably 0.7 wt% or less. Accordingly, the range of copper addition may be 0 wt% to 1.0 wt% of the total weight of the thick steel plate.

### Titanium (Ti), Niobium (Nb), and Vanadium (V)

Titanium (Ti), niobium (Nb), and vanadium (V) are all elements that precipitate as carbonitrides and increase the strength of steel. These elements may be added alone or in combination of two or more. However, if these elements are added in excess, the strength of the steel is excessively improved and the target cryogenic toughness cannot be secured.

Accordingly, the titanium content is set at 0.025 wt% or less (excluding 0 wt%), more preferably 0.018 wt% or less, and even more preferably 0.015 wt% or less. The niobium content is set at 0.10 wt% or less (excluding 0 wt%), more preferably 0.05 wt% or less, and even more preferably 0.02 wt% or less. The vanadium content is set at 0.50 wt% or less (excluding 0 wt%), more preferably 0.3 wt% or less, and even more preferably 0.2 wt% or less.

### Boron (B)

Boron (B) is an element that contributes to strength improvement of steel by improving hardenability. If boron is added in excess, the strength of the steel is excessively improved and the target cryogenic toughness cannot be secured; therefore, the boron content may be 0.005 wt% or less (excluding 0 wt%), more preferably 0.003 wt% or less, and even more preferably 0.002 wt% or less. Accordingly, the range of boron addition may be 0 wt% to 0.005 wt% of the total weight of the thick steel plate.

### Calcium (Ca), Rare Earth Metal (REM), Zirconium (Zr)

At least one selected from the group consisting of calcium (Ca) at 0.003 wt% or less (excluding 0 wt%), rare earth metal (REM) at 0.005 wt% or less (excluding 0 wt%), and zirconium (Zr) at 0.005 wt% or less (excluding 0 wt%) may be further included. Calcium, rare earth metals, and zirconium are all deoxidizing elements; their addition lowers the oxygen concentration in steel, reducing the amount of oxides and thus having a favorable effect on toughness. These elements may be added alone or in combination of two or more. In order to effectively demonstrate these effects, it is preferable to set the calcium content at 0.0005 wt% or more, the rare earth metal content (the content of an individual rare earth metal when contained alone, or the total content when two or more are contained; the same applies hereinafter regarding amounts of rare earth metals) at 0.0005 wt% or more, and the zirconium content at 0.0005 wt% or more. However, if added in excess, the size of oxides increases and cryogenic toughness decreases; therefore, the preferred upper limit of the calcium content is 0.003 wt% or less (more preferably 0.0025 wt% or less), the preferred upper limit of the rare earth metal content is 0.0050 wt% or less (more preferably 0.004 wt% or less), and the preferred upper limit of the zirconium content is 0.005 wt% or less (more preferably 0.004 wt% or less).

The rare earth metals are rare earth elements, and are a group of elements consisting of lanthanoid elements (the 15 elements from La at atomic number 57 to Lu at atomic number 71 in the periodic table) to which Sc and Y are added; these may be used alone or in combination of two or more. Preferred rare earth elements are Ce and La. The form of addition of rare earth metals is not particularly limited; they may be added in the form of misch metal (for example, containing approximately 70 wt% Ce and approximately 20 to 30 wt% La) mainly comprising Ce and La, or Ce, La, and the like may be added individually.

The manganese and aluminum contents may satisfy the following Formula 1, and the carbon, manganese, nitrogen, and aluminum contents may satisfy the following Formula 2. The contents of the elements in Formulas 1 and 2 are in wt%. [Formula 1] $50 \leq E = \left[Mn\right] / \left[Al\right] \leq 67$ [Formula 2] $9 \leq F = \left(\left[C\right]+\left[Mn\right]/6+\left[N\right]\right) / \left[Al\right] \leq 13$
(wherein [Mn], [Al], [C], and [N] are the weight% values of manganese, aluminum, carbon, and nitrogen, respectively)

Formulas 1 and 2 are intended to ensure an impact toughness of 27 J at -196°C in the weld heat-affected zone.

When at least one of the above Formulas 1 and 2 is satisfied, the following effects are exhibited. Specifically, in order to compensate for the disadvantages of silicon or nitrogen, which cause temper embrittlement or reduce impact toughness: silicon is not separately added apart from trace impurities, but aluminum is added to secure a deoxidation effect within the steel material; and nitrogen can be trapped with aluminum to form nitrides that are uniformly distributed throughout the microstructure.

In order to achieve the above-described effects, the lower limit of aluminum must be 0.025 wt% or more. However, if added excessively beyond 0.1 wt%, coalesced bainite forms coarsely due to aluminum solid solution, degrading the cryogenic toughness of the base metal and the weld heat-affected zone; therefore, the upper limit is limited to 0.1 wt%. In the present invention, it was confirmed that the cryogenic toughness of the weld heat-affected zone tends to improve when aluminum nitride (AlN) is distributed in an appropriate amount. Based on this, through numerous fundamental experiments, it was confirmed that the E value represented by Formula (1) and the F value represented by Formula (2) can be utilized as useful parameters for evaluating the cryogenic toughness of the weld heat-affected zone.

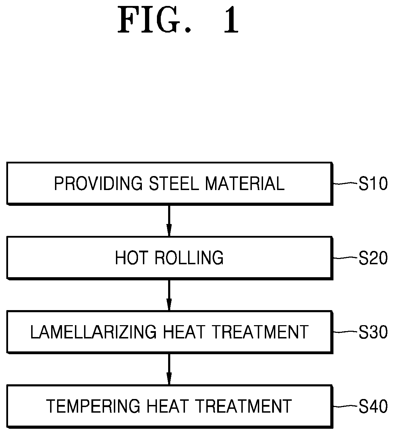

FIG. 1 is a flowchart illustrating a method of manufacturing a thick steel plate having excellent cryogenic toughness in a weld heat-affected zone according to one embodiment of the present invention.

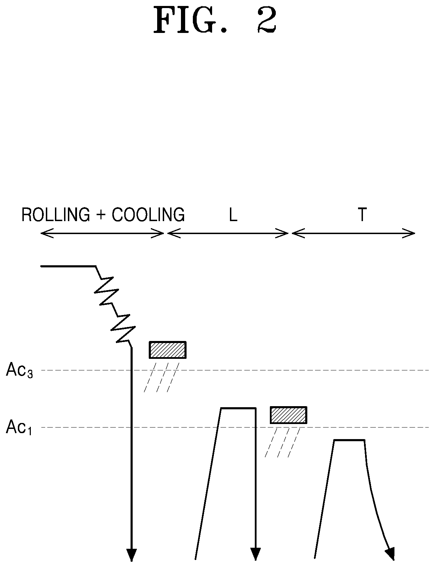

FIG. 2 is a diagram illustrating a heat treatment concept in a method of manufacturing a thick steel plate having excellent cryogenic toughness in a weld heat-affected zone according to one embodiment of the present invention.

Referring to FIGS. 1 and 2, the method of manufacturing the thick steel plate having excellent cryogenic toughness in a weld heat-affected zone according to one embodiment of the present invention comprises, in the following order: a first step (S10) of providing a steel material comprising, in wt%, carbon (C): 0.03 to 0.10%, manganese (Mn): 1.4 to 3.0%, aluminum (Al): 0.025 to 0.10%, nickel (Ni): 4.8 to 6.0%, chromium (Cr): 0.1 to 1.0%, molybdenum (Mo): 0.1 to 1.0%, phosphorus (P): 0.01% or less (excluding 0%), sulfur (S): 0.01% or less (excluding 0%), nitrogen (N): 0.01% or less (excluding 0%), and a balance of iron (Fe) and other unavoidable impurities; a second step (S20) of hot rolling the steel material at a reheating temperature of 1000°C to 1200°C under a finish rolling temperature condition of Ar3 or higher; a third step (S30) of heating the hot-rolled steel material to a temperature range of Ac1 to Ac3, holding, and then quenching; and a fourth step (S40) of tempering the steel material at a temperature of Ac1 or lower.

### Providing Steel Material (S10)

A steel material having the above-described composition is provided. The semi-product that is the steel material may illustratively be a slab. The slab in a semi-product state may be obtained after obtaining molten steel having a predetermined composition through a steelmaking process and then through a continuous casting process.

### Hot Rolling (S20)

The second step (S20) of hot rolling the steel material at a reheating temperature of 1000°C to 1200°C under a finish rolling temperature condition of Ar3 or higher is performed.

Reheating is performed in the range of 1000°C to 1200°C. If the reheating temperature is less than 1000°C, homogenization treatment in the single austenite phase may be insufficient, the rolling start temperature may be low, causing equipment load, it becomes difficult to match the finish rolling temperature, and martensite cannot be sufficiently secured after hot rolling because austenite is excessively refined. The reheating time may be, for example, 1 hour to 4 hours; however, this is exemplary, and the technical concept of the present invention is not limited thereto.

If the reheating temperature exceeds 1200°C, austenite grows excessively, causing packets to coarsen after final tempering, which may lead to degradation of cryogenic toughness in the base metal and heat-affected zone.

During hot rolling, the finish rolling temperature is limited to Ar3 or higher. If finish rolling is performed below Ar3, pro-eutectoid ferrite is formed, making it difficult to secure retained austenite at a target level after the after the tempering treatment (T3), which results in degradation of cryogenic toughness.

Cooling after finish rolling is performed sufficiently rapidly so that a martensite matrix microstructure can be secured. Preferably, the steel plate is water-cooled at a rate of 5°C/second or more.

### Lamellarizing Heat Treatment (S30)

The third step (S30) of heating the hot-rolled steel material to a temperature range of Ac1 to Ac3, holding, and then quenching is performed. After hot rolling, the steel material is heated to the temperature range (TL) of Ac1 to Ac3, held, and then quenched. The purpose of performing the lamellarizing heat treatment is to concentrate alloying elements such as Mn, Ni, Cr, and Mo in the austenite phase formed in the temperature range (TL) of Ac1 to Ac3 to obtain an austenite phase that exists metastably at room temperature. If the lamellarizing heat treatment is performed below Ac1, alloying element partitioning does not proceed smoothly, and the intended amount of retained austenite cannot be secured. If the lamellarizing heat treatment is performed above Ac3, a single austenite phase region is entered, making the concentration distribution of alloying elements within the microstructure uniform, so that the expected alloying element partitioning effect cannot be obtained. The temperature range of the lamellarizing heat treatment may be, for example, in the range of 620°C to 790°C.

The holding time in the Ac1 to Ac3 region may be, for example, 30 minutes to 150 minutes. If less than 30 minutes, alloying elements such as Ni, Cr, and Mo are not sufficiently concentrated in the austenite phase, and as a result, the retained austenite phase cannot be secured at the target level; if more than 150 minutes, the retained austenite phase coarsens and crack propagation cannot be sufficiently suppressed during cryogenic toughness testing. The preferred holding time may be limited to 30 minutes to 150 minutes. However, this is exemplary, and the technical concept of the present invention is not limited thereto.

### Tempering Heat Treatment (S40)

The fourth step (S40) of tempering the steel material at a temperature of Ac1 or lower may be performed. After the lamellarizing heat treatment (L of FIG. 2), tempering (T of FIG. 2) is performed. The tempering heat treatment is performed at a temperature of Ac1 or lower, and specifically, for example, in the range (T3) of 550°C to 620°C for, for example, 30 minutes to 200 minutes (t3). Through the tempering heat treatment, carbon (C) is concentrated in the metastable austenite generated during the lamellarizing heat treatment, increasing the stability of the retained austenite and thereby improving cryogenic toughness. If the tempering temperature is lower than 550°C, the metastable retained austenite phase decomposes into the α phase and cementite (Fe3C), which may degrade cryogenic toughness. If the tempering temperature exceeds Ac1, for example exceeds 620°C, retained austenite coarsens and cryogenic crack resistance decreases. Similar degradation of cryogenic toughness may also result when tempering is performed for a long time exceeding 200 minutes. After tempering, water cooling or air cooling may be performed.

The microstructure of the thick steel plate having excellent cryogenic toughness in a weld heat-affected zone realized by performing the above-described steps may comprise retained austenite dispersed at prior austenite grain boundaries and packet boundaries in a tempered martensite matrix in a volume fraction in the range of 5% to 15%. Here, the prior austenite refers to the austenite initially formed.

The retained austenite may have an average equivalent circle diameter of 3 µm or less. The retained austenite may comprise acicular retained austenite having a minor axis/major axis aspect ratio of 1.5 or more in a volume fraction of 50% or more, and may be 50% to 90% of the total retained austenite.

The thick steel plate having excellent cryogenic toughness in a weld heat-affected zone may have an average impact toughness of 27 J or more at -196°C.

In the thick steel plate, a weld heat-affected zone formed by a heat input in a range of 10 kJ/cm to 30 kJ/cm may have an average impact toughness of 27 J or more at -196°C.

The thick steel plate may satisfy yield strength (YS): 640 MPa to 890 MPa, tensile strength (TS): 710 MPa to 930 MPa, and elongation (EL): 20% to 30%.

The welded structure manufactured by using the thick steel plate having excellent cryogenic toughness in a weld heat-affected zone according to one embodiment of the present invention may comprise a steel plate comprising, in wt%, carbon (C): 0.03 to 0.10%, manganese (Mn): 1.4 to 3.0%, aluminum (Al): 0.025 to 0.10%, nickel (Ni): 4.8 to 6.0%, chromium (Cr): 0.1 to 1.0%, molybdenum (Mo): 0.1 to 1.0%, phosphorus (P): 0.01% or less (excluding 0%), sulfur (S): 0.01% or less (excluding 0%), nitrogen (N): 0.01% or less (excluding 0%), and a balance of iron (Fe) and other unavoidable impurities.

In addition, the steel plate may further contain at least one selected from the group consisting of, in wt%, Cu: 1.00% or less (excluding 0%), Ti: 0.025% or less (excluding 0%), Nb: 0.10% or less (excluding 0%), V: 0.50% or less (excluding 0%), B: 0.0050% or less (excluding 0%), Ca: 0.0030% or less (excluding 0%), REM: 0.0050% or less (excluding 0%), and Zr: 0.0050% or less (excluding 0%).

The microstructure of the base metal in the welded structure may comprise retained austenite dispersed at prior austenite grain boundaries and packet boundaries in a tempered martensite matrix in a volume fraction in the range of 5% to 15%.

The weld heat-affected zone of the welded structure may have a microstructure in which bainite and lath martensite combined account for 95% or more in volume fraction. The remaining microstructure may comprise at least one of cementite and martensite-austenite (MA).

The welded structure may be fabricated from the thick steel plate by, for example, an arc welding method.

### Experimental Examples

Hereinafter, experimental examples for facilitating understanding of the present invention will be described. The following experimental examples are presented to facilitate understanding of the invention and the present invention is not limited to the following experimental examples.

Using a vacuum melting furnace, ingots were prepared by melting and casting elements of the compositions shown in Table 1, after which thick steel plate samples according to the experimental examples of the present invention were respectively manufactured. The balance, other than the constituent elements, is iron (Fe).

**[Table 1]**

| Classification | C | Mn | P | S | Al | Ni | Cr | Mo | N |
|---|---|---|---|---|---|---|---|---|---|
| Embodiment 1 | 0.057 | 2.19 | 0.0028 | 0.0021 | 0.042 | 4.88 | 0.3 | 0.3 | 0.0039 |
| Embodiment 2 | 0.057 | 2.19 | 0.0028 | 0.0021 | 0.042 | 4.88 | 0.3 | 0.3 | 0.0039 |
| Embodiment 3 | 0.054 | 1.46 | 0.0032 | 0.002 | 0.025 | 4.96 | 0.4 | 0.207 | 0.0053 |
| Embodiment 4 | 0.05 | 2.91 | 0.0043 | 0.0022 | 0.051 | 4.95 | 0.61 | 0.45 | 0.0043 |
| Embodiment 5 | 0.055 | 2.15 | 0.003 | 0.0017 | 0.033 | 4.95 | 0.41 | 0.205 | 0.0055 |
| Embodiment 6 | 0.0485 | 2.216 | 0.0051 | 0.0022 | 0.0398 | 5.504 | 0.3073 | 0.2036 | 0.0078 |
| Embodiment 7 | 0.0418 | 1.7156 | 0.0035 | 0.0018 | 0.0259 | 5.2566 | 0.2889 | 0.1928 | 0.0038 |
| Embodiment 8 | 0.035 | 2.76 | 0.0029 | 0.0019 | 0.045 | 5.37 | 0.3 | 0.2 | 0.0031 |
| Embodiment 9 | 0.051 | 2.18 | 0.0012 | 0.0037 | 0.035 | 5.4 | 0.32 | 0.2 | 0.0047 |
| Embodiment 10 | 0.031 | 2.21 | 0.0026 | 0.0028 | 0.04 | 5.2 | 0.3 | 0.2 | 0.0082 |
| Comparative Example1 | 0.058 | 1.14 | 0.0032 | 0.002 | 0.031 | 4.96 | 0.407 | 0.207 | 0.007 |
| Comparative Example 2 | 0.062 | 1.1 | 0.0033 | 0.002 | 0.032 | 4.98 | 0.402 | 0.211 | 0.018 |
| Comparative Example 3 | 0.057 | 1.48 | 0.003 | 0.0009 | 0.035 | 4.96 | 0.4 | 0.2 | 0.0035 |
| Comparative Example 4 | 0.03 | 0.44 | 0.0031 | 0.0015 | 0.025 | 5.91 | 0.6 | 0.2 | 0.0038 |
| Comparative Example 5 | 0.06 | 1.5 | 0.0025 | 0.0021 | 0.05 | 5 | 0.4 | 0.2 | 0.0041 |
| Comparative Example 6 | 0.051 | 2.71 | 0.002 | 0.0017 | 0.029 | 5.12 | 0.3 | 0.2 | 0.0036 |
| Comparative Example 7 | 0.045 | 0.75 | 0.0033 | 0.0019 | 0.021 | 5.37 | 0.3 | 0.2 | 0.0028 |

Referring to Table 1, Embodiments 1 to 10 satisfy the composition range comprising, in wt%, carbon (C): 0.03 to 0.10%, manganese (Mn): 1.4 to 3.0%, aluminum (Al): 0.025 to 0.10%, nickel (Ni): 4.8 to 6.0%, chromium (Cr): 0.1 to 1.0%, molybdenum (Mo): 0.1 to 1.0%, phosphorus (P): 0.01% or less (excluding 0%), sulfur (S): 0.01% or less (excluding 0%), nitrogen (N): 0.01% or less (excluding 0%), and a balance of iron (Fe) and other unavoidable impurities.

Comparative Example 1 falls outside the range of manganese specified in the present invention. Comparative Example 2 falls outside the ranges of the manganese and nitrogen specified in the present invention. Comparative Example 3 satisfies the composition range. Comparative Example 4 falls outside the range of manganese specified in the present invention. Comparative Example 5 satisfies the above composition. Comparative Example 6 falls outside the range of manganese specified in the present invention. Comparative Example 7 falls outside the ranges of manganese and aluminum specified in the present invention.

Table 2 shows parameter values and heat treatment temperatures according to the compositions in the experimental examples of the present invention.

**[Table 2]**

| Classification | Parameter 1 | Parameter 2 | Heat treatment & Time | | | |
|---|---|---|---|---|---|---|
| | Mn/Al | (C+Mn/6+N)/Al | TL (°C) | tL (min) | T3 (°C) | t3 (min) |
| Embodiment 1 | 52.1 | 10.1 | 708 | 55 | 610 | 42 |
| Embodiment 2 | 52.1 | 10.1 | 681 | 62 | 609 | 59 |
| Embodiment 3 | 58.4 | 12.1 | 707 | 70 | 608 | 111 |
| Embodiment 4 | 57.1 | 10.6 | 710 | 38 | 610 | 37 |
| Embodiment 5 | 65.2 | 12.7 | 711 | 67 | 605 | 72 |
| Embodiment 6 | 55.7 | 10.7 | 688 | 55 | 610 | 88 |
| Embodiment 7 | 66.2 | 12.8 | 670 | 98 | 610 | 91 |
| Embodiment 8 | 61.3 | 11.1 | 652 | 72 | 591 | 101 |
| Embodiment 9 | 62.3 | 12.0 | 699 | 66 | 611 | 55 |
| Embodiment 10 | 55.3 | 10.2 | 711 | 100 | 618 | 172 |
| Comparative Example1 | 36.8 | 8.2 | 690 | 102 | 601 | 99 |
| Comparative Example 2 | 34.4 | 8.2 | 709 | 85 | 611 | 109 |
| Comparative Example 3 | 42.3 | 8.8 | 821 | 61 | 595 | 84 |
| Comparative Example 4 | 17.6 | 4.3 | 649 | 121 | 609 | 71 |
| Comparative Example 5 | 30.0 | 6.3 | 711 | 56 | 608 | 62 |
| Comparative Example 6 | 93.4 | 17.5 | 661 | 54 | 509 | 49 |
| Comparative Example 7 | 35.7 | 8.2 | 668 | 100 | 620 | 150 |

In Table 2, "TL" is the lamellarizing heat treatment temperature, "tL" is the lamellarizing heat treatment time, "T3" is the tempering heat treatment temperature, and "t3" is the tempering heat treatment time.

In Table 2, Parameter 1 is the E value represented by the following Formula 1, and Parameter 2 is the F value represented by the following Formula 2. [Formula 1] $50 \leq E = \left[Mn\right] / \left[Al\right] \leq 67$ [Formula 2] $9 \leq F = \left(\left[C\right]+\left[Mn\right]/6+\left[N\right]\right) / \left[Al\right] \leq 13$
(wherein [Mn], [Al], [C], and [N] are the weight% values of manganese, aluminum, carbon, and nitrogen, respectively)

Referring to Table 2, Embodiments 1 to 10 satisfy the ranges of the above Formulas 1 and 2. None of the comparative examples satisfy both Formulas 1 and 2. Comparative Example 6 exceeds the upper limits of the above Formulas 1 and 2, and the other comparative examples fall below the lower limits of Formulas 1 and 2.

Table 3 shows yield strength, tensile strength, and elongation of the base metal in the experimental examples of the present invention.

**[Table 3]**

| Classification | Yield Strength (MPa) | Tensile Strength (MPa) | Elongation (%) |
|---|---|---|---|
| Embodiment 1 | 841 | 877 | 21 |
| Embodiment 2 | 794 | 866 | 24 |
| Embodiment 3 | 620 | 718 | 26 |
| Embodiment 4 | 884 | 921 | 21 |
| Embodiment 5 | 670 | 774 | 25 |
| Embodiment 6 | 724 | 812 | 24 |
| Embodiment 7 | 647 | 783 | 25 |
| Embodiment 8 | 825 | 861 | 22 |
| Embodiment 9 | 732 | 798 | 22 |
| Embodiment 10 | 705 | 771 | 23 |
| Comparative Example1 | 635 | 727 | 24 |
| Comparative Example 2 | 620 | 729 | 26 |
| Comparative Example 3 | 662 | 741 | 25 |
| Comparative Example 4 | 561 | 661 | 26 |
| Comparative Example 5 | 633 | 721 | 25 |
| Comparative Example 6 | 831 | 873 | 20 |
| Comparative Example 7 | 553 | 661 | 26 |

Referring to Table 3, the thick steel plate may satisfy yield strength (YS): 640 MPa to 890 MPa, tensile strength (TS): 710 MPa to 930 MPa, and elongation (EL): 20% to 30%.

Table 4 shows the impact toughness at -196°C of the base metal constituting the thick steel plate. The unit of the impact toughness is "J".

**[Table 4]**

| Classification | 1st Measurement | 2nd Measurement | 3rd Measurement | Average |
|---|---|---|---|---|
| Embodiment 1 | 199 | 188 | 189 | 192 |
| Embodiment 2 | 188 | 181 | 187 | 185 |
| Embodiment 3 | 169 | 191 | 170 | 177 |
| Embodiment 4 | 127 | 169 | 131 | 142 |
| Embodiment 5 | 139 | 141 | 131 | 137 |
| Embodiment 6 | 127 | 106 | 116 | 116 |
| Embodiment 7 | 152 | 160 | 171 | 161 |
| Embodiment 8 | 158 | 163 | 162 | 161 |
| Embodiment 9 | 159 | 145 | 148 | 151 |
| Embodiment 10 | 184 | 153 | 175 | 171 |
| Comparative Example1 | 188 | 152 | 174 | 171 |
| Comparative Example 2 | 145 | 138 | 130 | 138 |
| Comparative Example 3 | 225 | 221 | 216 | 221 |
| Comparative Example 4 | 262 | 321 | 308 | 297 |
| Comparative Example 5 | 171 | 159 | 176 | 169 |
| Comparative Example 6 | 117 | 143 | 129 | 130 |
| Comparative Example 7 | 227 | 196 | 179 | 201 |

Referring to Table 4, it can be confirmed that all of the embodiments and comparative examples have an average impact toughness of 27 J or more at -196°C.

In order to confirm the properties of the weld heat-affected zone, cryogenic (@-196°C) impact toughness (unit: J) under low heat input welding (10 kJ/cm) and high heat input welding (25 kJ/cm) conditions is summarized in Tables 5 and 6, respectively.

In Tables 5 and 6, FL refers to the fusion line region, FL+1mm refers to the region spaced 1 mm from the fusion line, FL+3mm refers to the region spaced 3 mm from the fusion line, and FL+5mm refers to the region spaced 5 mm from the fusion line. "Av" denotes the average value.

**[Table 5]**

| Classification | Low Heat Input Welding (10kJ/cm) | | | | | | | | | | | | | | | |
|---|---|---|---|---|---|---|---|---|---|---|---|---|---|---|---|---|
| | FL | | | | FL+1 | | | | FL+3 | | | | FL+5 | | | |
| | 1st | 2nd | 3rd | Av | 1st | 2nd | 3rd | Av | 1st | 2nd | 3rd | Av | 1st | 2nd | 3rd | Av |
| Embodiment 1 | 65 | 63 | 49 | 59 | 75 | 38 | 81 | 65 | 126 | 131 | 115 | 124 | 171 | 180 | 173 | 175 |
| Embodiment 2 | 51 | 69 | 68 | 63 | 70 | 81 | 67 | 73 | 133 | 139 | 117 | 130 | 191 | 167 | 186 | 181 |
| Embodiment 3 | 48 | 56 | 55 | 53 | 57 | 78 | 68 | 68 | 215 | 216 | 203 | 211 | 216 | 197 | 196 | 203 |
| Embodiment 4 | 63 | 45 | 39 | 49 | 44 | 71 | 62 | 59 | 51 | 60 | 69 | 60 | 101 | 91 | 132 | 108 |
| Embodiment 5 | 19 | 38 | 28 | 28 | 90 | 73 | 71 | 78 | 93 | 57 | 59 | 70 | 149 | 159 | 151 | 153 |
| Embodiment 6 | 73 | 57 | 69 | 66 | 102 | 72 | 77 | 84 | 157 | 161 | 139 | 152 | 162 | 173 | 178 | 171 |
| Embodiment 7 | 58 | 52 | 53 | 54 | 129 | 99 | 144 | 124 | 215 | 190 | 223 | 209 | 189 | 223 | 218 | 210 |
| Embodiment 8 | 45 | 62 | 38 | 48 | 66 | 58 | 71 | 65 | 121 | 119 | 101 | 114 | 165 | 171 | 149 | 162 |
| Embodiment 9 | 65 | 81 | 59 | 68 | 132 | 118 | 141 | 130 | 179 | 161 | 187 | 176 | 181 | 174 | 186 | 180 |
| Embodiment 10 | 73 | 77 | 90 | 80 | 125 | 91 | 89 | 102 | 153 | 141 | 138 | 144 | 166 | 172 | 185 | 174 |
| Comparative Example 1 | 17 | 20 | 31 | 23 | 25 | 19 | 35 | 26 | 135 | 117 | 99 | 117 | 160 | 149 | 155 | 155 |
| Comparative Example 2 | 26 | 19 | 41 | 29 | 26 | 16 | 29 | 24 | 203 | 176 | 218 | 199 | 165 | 200 | 158 | 174 |
| Comparative Example 3 | 35 | 56 | 42 | 44 | 247 | 210 | 212 | 223 | 220 | 235 | 219 | 225 | 243 | 251 | 207 | 234 |
| Comparative Example 4 | 31 | 29 | 19 | 26 | 51 | 42 | 25 | 39 | 158 | 181 | 181 | 173 | 256 | 271 | 244 | 257 |
| Comparative Example 5 | 47 | 62 | 54 | 54 | 44 | 38 | 47 | 43 | 38 | 34 | 32 | 35 | 58 | 53 | 31 | 47 |
| Comparative Example 6 | 13 | 9 | 17 | 13 | 19 | 22 | 16 | 19 | 71 | 90 | 59 | 73 | 131 | 118 | 124 | 124 |
| Comparative Example 7 | 45 | 39 | 47 | 44 | 61 | 38 | 49 | 49 | 144 | 128 | 135 | 136 | 207 | 225 | 198 | 210 |

Referring to Table 5, it can be confirmed that Embodiments 1 to 10 all have an average cryogenic impact toughness of 27 J or more in the heat-affected zone (FL to **FL+5mm)** under low heat input welding (10 kJ/cm) conditions

On the other hand, it can be confirmed that Comparative Examples 1, 2, 4, and 6 have an average cryogenic impact toughness of less than 27 J in at least a portion of the heat-affected zone (FL to **FL+5mm).** For example, it can be confirmed that Comparative Examples 1, 4, and 6 have an average cryogenic impact toughness of less than 27 J at the fusion line, and that Comparative Examples 1, 2, and 6 have an average cryogenic impact toughness of less than 27 J in the region spaced 1 mm from the fusion line.

**[Table 6]**

| Classification | High Heat Input Welding (25 kJ/cm) | | | | | | | | | | | | | | | |
|---|---|---|---|---|---|---|---|---|---|---|---|---|---|---|---|---|
| | FL | | | | FL+1 | | | | FL+3 | | | | FL+5 | | | |
| | 1st | 2nd | 3rd | Av | 1st | 2nd | 3rd | Av | 1st | 2nd | 3rd | Av | 1st | 2nd | 3rd | Av |
| Embodiment 1 | 41 | 35 | 29 | 35 | 55 | 82 | 56 | 64 | 98 | 88 | 87 | 91 | 141 | 162 | 139 | 147 |
| Embodiment 2 | 44 | 51 | 63 | 53 | 71 | 88 | 90 | 83 | 103 | 111 | 108 | 107 | 171 | 180 | 162 | 171 |
| Embodiment 3 | 51 | 49 | 37 | 46 | 45 | 50 | 44 | 46 | 228 | 69 | 230 | 176 | 210 | 209 | 218 | 212 |
| Embodiment 4 | 37 | 40 | 31 | 36 | 51 | 83 | 72 | 69 | 65 | 88 | 78 | 77 | 121 | 118 | 127 | 122 |
| Embodiment 5 | 23 | 34 | 56 | 38 | 82 | 72 | 41 | 65 | 47 | 41 | 35 | 41 | 122 | 75 | 115 | 104 |
| Embodiment 6 | 60 | 90 | 35 | 62 | 68 | 78 | 102 | 83 | 158 | 174 | 159 | 164 | 162 | 177 | 181 | 173 |
| Embodiment 7 | 84 | 43 | 59 | 62 | 52 | 62 | 90 | 68 | 153 | 172 | 104 | 143 | 167 | 185 | 181 | 178 |
| Embodiment 8 | 35 | 29 | 41 | 35 | 54 | 27 | 38 | 40 | 98 | 90 | 89 | 92 | 135 | 141 | 119 | 132 |
| Embodiment 9 | 74 | 48 | 64 | 62 | 111 | 103 | 99 | 104 | 165 | 162 | 199 | 175 | 171 | 188 | 183 | 181 |
| Embodiment 10 | 91 | 89 | 37 | 72 | 64 | 41 | 77 | 61 | 182 | 150 | 119 | 150 | 153 | 187 | 179 | 173 |
| Comparative Example1 | 21 | 15 | 14 | 17 | 24 | 13 | 17 | 18 | 37 | 83 | 70 | 63 | 66 | 57 | 85 | 69 |
| Comparative Example 2 | 28 | 29 | 32 | 30 | 33 | 53 | 40 | 42 | 72 | 66 | 52 | 63 | 193 | 127 | 204 | 175 |
| Comparative Example 3 | 16 | 22 | 9 | 16 | 60 | 22 | 30 | 37 | 73 | 90 | 44 | 69 | 123 | 175 | 98 | 132 |
| Comparative Example 4 | 24 | 14 | 17 | 18 | 20 | 12 | 22 | 18 | 161 | 38 | 259 | 153 | 218 | 183 | 223 | 208 |
| Comparative Example 5 | 21 | 12 | 17 | 17 | 13 | 13 | 15 | 14 | 28 | 45 | 44 | 39 | 59 | 56 | 70 | 62 |
| Comparative Example 6 | 43 | 29 | 38 | 37 | 65 | 66 | 51 | 61 | 64 | 88 | 101 | 84 | 127 | 109 | 116 | 117 |
| Comparative Example 7 | 11 | 19 | 18 | 16 | 21 | 29 | 18 | 26 | 50 | 61 | 60 | 57 | 83 | 109 | 76 | 89 |

Referring to Table 6, it can be confirmed that Embodiments 1 to 10 all have an average cryogenic impact toughness of 27 J or more in the heat-affected zone (FL **to FL+5mm)** under high heat input welding (25 kJ/cm) conditions.

On the other hand, it can be confirmed that Comparative Examples 1, 3, 4, 5, and 7 have an average cryogenic impact toughness of less than 27 J in at least a portion of the heat-affected zone (FL to **FL+5mm).** For example, it can be confirmed that Comparative Examples 1, 3, 4, 5, and 7 have an average cryogenic impact toughness of less than 27 J at the fusion line, and that Comparative Examples 1, 4, 5, and 7 have an average cryogenic impact toughness of less than 27 J in the region spaced 1 mm from the fusion line.

Looking at the results of the above-described experimental examples, it can be understood that when both the composition range of the present invention and the ranges required by parameters (1) and (2) are satisfied, the average cryogenic impact toughness is 27 J or more throughout the entire heat-affected zone under both low heat input welding and high heat input welding conditions.

On the other hand, according to the comparative examples, it can be confirmed that when the composition range of the present invention is not satisfied, or when, as in Comparative Examples 3 and 5, the composition range of the present invention is satisfied but the ranges required by Parameter (1) or Parameter (2) are not satisfied, regions where the average cryogenic impact toughness falls below 27 J appear within the weld heat-affected zone. Accordingly, Parameters (1) and (2) can serve as important criteria for securing an average cryogenic impact toughness of 27 J or more in the weld heat-affected zone.

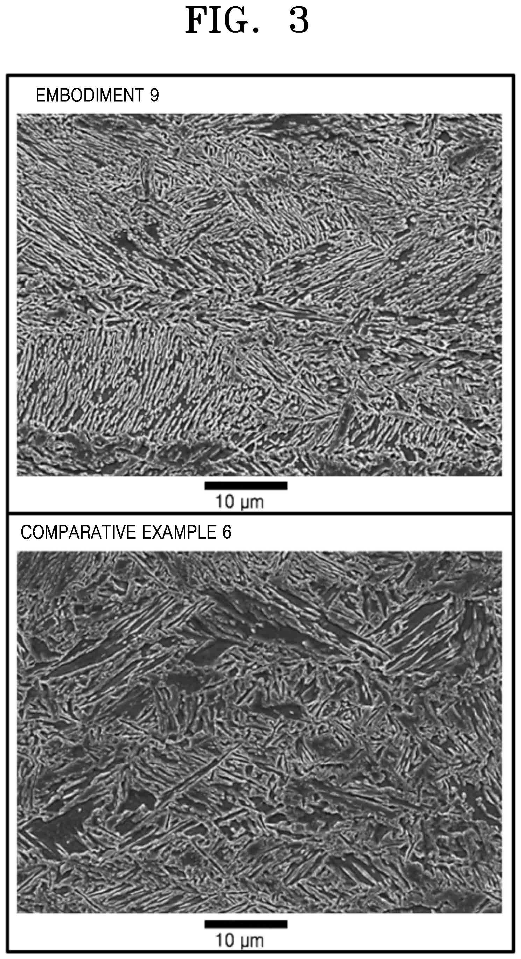

FIG. 3 is a scanning electron microscopy (SEM) photograph of the microstructures of thick steel plates according to Embodiment 9 and Comparative Example 6 among the experimental examples of the present invention.

Referring to FIG. 3, in Embodiment 9, by adding manganese at 2.18 wt%, the retained austenite fraction of the base metal was secured, and by adding aluminum at 0.035 wt%, a fine lath martensite structure was obtained.

On the other hand, Comparative Example 6 contains manganese at 2.71 wt%, but with aluminum added at 0.029 wt%, does not satisfy Formula 1, and it can be seen that lath martensite is coarsely formed.

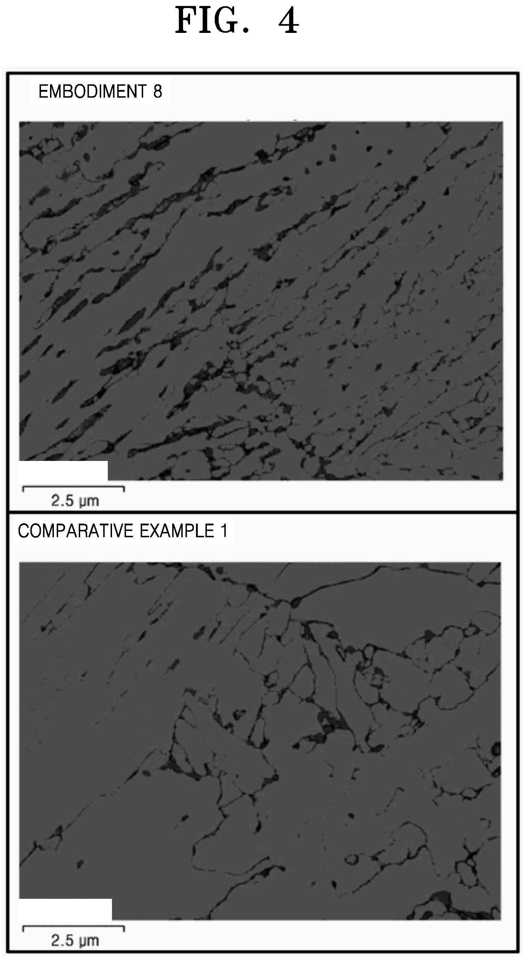

FIG. 4 shows results of electron backscatter diffraction (EBSD) analysis of the microstructures of thick steel plates according to Embodiment 8 and Comparative Example 1 among the experimental examples of the present invention.

Referring to FIG. 4, Embodiment 8, in which manganese is sufficiently added in an amount of 2.76 wt%, has a microstructure in which retained austenite is uniformly distributed at prior austenite grain boundaries and packet boundaries, and thus excellent cryogenic toughness can be secured.

On the other hand, Comparative Example 1, with manganese added as low as 1.14 wt% relative to the lower limit of the range of the present invention, has retained austenite locally formed in a small amount, and therefore it may be difficult to effectively suppress brittle crack propagation at cryogenic temperatures.

Referring to FIGS. 3 and 4, the microstructure of the thick steel plate according to the embodiment of the present invention comprises retained austenite dispersed at prior austenite grain boundaries and packet boundaries in a tempered martensite matrix in a volume fraction in the range of 5% to 15%. The tempered martensite is contained in a volume fraction in the range of 85% to 95%. The retained austenite is uniformly dispersed and distributed at lath interfaces, packet interfaces, prior austenite boundaries, and the like, and comprises acicular retained austenite having an average equivalent circle diameter of 3 µm or less and a minor axis/major axis aspect ratio of 1.5 or more in a volume fraction of 50% or more of the total retained austenite. It was confirmed that other embodiments also have a similar microstructure.

In the case of the comparative examples, it can be confirmed that an average cryogenic impact toughness of 27 J or more under high heat input welding could not be secured due to the excessive formation of coalesced bainite. In the present invention, coalesced bainite may be defined as a microstructure in which the packet size is coarse and cementite is distributed in large amounts within the packet. In addition, in the case of the comparative examples, it can be confirmed that when retained austenite grows excessively to take a globular morphology, cryogenic toughness of the base metal and weld heat-affected zone is degraded.

The technical concept of the present invention described above is not limited to the above-described embodiments and the accompanying drawings, and it will be apparent to those of ordinary skill in the technical field to which the technical concept of the present invention pertains that various substitutions, modifications, and changes are possible without departing from the technical concept of the present invention.

## Claims

1. A thick steel plate comprising, in wt%, carbon (C): 0.03 to 0.10%, manganese (Mn): 1.4 to 3.0%, aluminum (Al): 0.025 to 0.10%, nickel (Ni): 4.8 to 6.0%, chromium (Cr): 0.1 to 1.0%, molybdenum (Mo): 0.1 to 1.0%, phosphorus (P): 0.01% or less (excluding 0%), sulfur (S): 0.01% or less (excluding 0%), nitrogen (N): 0.01% or less (excluding 0%), and a balance of iron (Fe) and other unavoidable impurities, wherein the thick steel plate satisfies the following Formula 1: [Formula 1] $50 \leq E = \left[Mn\right] / \left[Al\right] \leq 67$ (wherein [Mn] and [Al] are the weight% values of manganese and aluminum, respectively), and wherein the thick steel plate has excellent cryogenic toughness in a weld heat-affected zone.

2. The thick steel plate of claim 1, wherein the thick steel plate further satisfies the following Formula 2: [Formula 2] $9 \leq F = \left(\left[C\right]+\left[Mn\right]/6+\left[N\right]\right) / \left[Al\right] \leq 13$ (wherein [Mn], [Al], [C], and [N] are the weight% values of manganese, aluminum, carbon, and nitrogen, respectively).

3. The thick steel plate of claim 1, wherein the thick steel plate has a microstructure comprising retained austenite in a volume fraction of 5% to 15%, the retained austenite being dispersed at prior austenite grain boundaries and packet boundaries in a tempered martensite matrix.

4. The thick steel plate of claim 3, wherein the retained austenite has an average equivalent circle diameter of 3 µm or less, and acicular retained austenite having a minor axis/major axis aspect ratio of 1.5 or more accounts for 50% or more in volume fraction of the total retained austenite.

5. The thick steel plate of claim 1, wherein the thick steel plate has an average impact toughness of 27 J or more at -196°C.

6. The thick steel plate of claim 1, wherein a weld heat-affected zone formed by a heat input in a range of 10 kJ/cm to 30 kJ/cm has an average impact toughness of 27 J or more at -196°C.

7. The thick steel plate of claim 1, wherein the thick steel plate satisfies yield strength (YS): 640 MPa to 890 MPa, tensile strength (TS): 710 MPa to 930 MPa, and elongation (EL): 20% to 30%.

8. A method of manufacturing a thick steel plate having excellent cryogenic toughness in a weld heat-affected zone, the method comprising, in the following order:
a first step of providing a steel material comprising, in wt%, carbon (C): 0.03 to 0.10%, manganese (Mn): 1.4 to 3.0%, aluminum (Al): 0.025 to 0.10%, nickel (Ni): 4.8 to 6.0%, chromium (Cr): 0.1 to 1.0%, molybdenum (Mo): 0.1 to 1.0%, phosphorus (P): 0.01% or less (excluding 0%), sulfur (S): 0.01% or less (excluding 0%), nitrogen (N): 0.01% or less (excluding 0%), and a balance of iron (Fe) and other unavoidable impurities;
a second step of hot rolling the steel material at a reheating temperature of 1000°C to 1200°C under a finish rolling temperature condition of Ar3 or higher;
a third step of heating the hot-rolled steel material to a temperature range of Ac1 to Ac3, holding, and then quenching; and
a fourth step of tempering the steel material at a temperature of Ac1 or lower,
wherein the thick steel plate manufactured by the method satisfies the following Formula 1: [Formula 1] $50 \leq E = \left[Mn\right] / \left[Al\right] \leq 67$
(wherein [Mn] and [Al] are the weight% values of manganese and aluminum, respectively).

9. The method of claim 8, wherein the thick steel plate further satisfies the following Formula 2: [Formula 2] $9 \leq F = \left(\left[C\right]+\left[Mn\right]/6+\left[N\right]\right) / \left[Al\right] \leq 13$ (wherein [Mn], [Al], [C], and [N] are the weight% values of manganese, aluminum, carbon, and nitrogen, respectively).

10. The method of claim 8, wherein the third step is performed by holding the steel material in a temperature range of Ac1 to Ac3 for 30 minutes to 150 minutes.

11. The method of claim 8, wherein the fourth step is performed at a temperature in a range of 550°C to 620°C for 30 minutes to 200 minutes.

12. A welded structure manufactured by welding the thick steel plate having excellent cryogenic toughness in a weld heat-affected zone of any one of claims 1 to 7, wherein the welded structure satisfies the following Formula 1: [Formula 1] $50 \leq E = \left[Mn\right] / \left[Al\right] \leq 67$ (wherein [Mn] and [Al] are the weight% values of manganese and aluminum, respectively), and wherein the weld heat-affected zone of the welded structure has an average impact toughness of 27 J or more at -196°C.

13. The welded structure of claim 12, wherein the welded structure satisfies the following Formula 2: [Formula 2] $9 \leq F = \left(\left[C\right]+\left[Mn\right]/6+\left[N\right]\right) / \left[Al\right] \leq 13$ (wherein [Mn], [Al], [C], and [N] are the weight% values of manganese, aluminum, carbon, and nitrogen, respectively).

14. The welded structure of claim 12, wherein the weld heat-affected zone of the welded structure has a microstructure in which bainite and lath martensite combined account for 95% or more in volume fraction.
